# EUROPÄISCHE PATENTANMELDUNG

(11) **EP 1 783 236 A1**
(43) Veröffentlichungstag der Anmeldung: **09.05.2007**
(21) Anmeldenummer: 05024112.4
(22) Anmeldetag: 04.11.2005
(51) Int. Cl.: C22C 19/05, C23C 4/08, C22C 19/07

(54) **Legierung, Schutzschicht zum Schutz eines Bauteils gegen Korrosion und/oder Oxidation bei hohen Temperaturen und Bauteil**

(71) Anmelder: SIEMENS AKTIENGESELLSCHAFT, 80333 München (DE)
(72) Erfinder: Stamm, Werner, Dr., 45481 Mülheim an der Ruhr (DE)

(57) **Zusammenfassung**

Bekannte Schutzschichten mit hohem Cr-Gehalt bilden Sprödphasen aus, die unter dem Einfluss von Kohlenstoff während des Einsatzes zusätzlich verspröden.

Die erfindungsgemäße Schutzschicht (7) hat die Zusammensetzung 26% bis 28% Kobalt, 20% bis 22% Chrom, 7% bis 8% Aluminium, 0,5% bis 0,7% Yttrium und/oder zumindest ein äquivalentes Metall aus der Gruppe umfassend Scandium und die Elemente der Seltenen Erden, optional Silizium und/oder Rhenium sowie Rest Nickel.

## Beschreibung

Die Erfindung betrifft eine Legierung gemäß Anspruch 1, eine Schutzschicht zum Schutz eines Bauteils gegen Korrosion und/oder Oxidation bei hohen Temperaturen gemäß Anspruch 14 und ein Bauteil gemäß Anspruch 15.

Die Erfindung bezieht sich insbesondere auf eine Schutzschicht für ein Bauteil, das aus einer Superlegierung auf Nickel- oder Kobaltbasis besteht.

Schutzschichten für metallische Bauteile, die deren Korrosionsbeständigkeit und/oder Oxidationsbeständigkeit erhöhen sollen, sind im Stand der Technik in großer Zahl bekannt. Die meisten dieser Schutzschichten sind unter dem Sammelnamen MCrAlY bekannt, wobei M für mindestens eines der Elemente aus der Gruppe umfassend Eisen, Kobalt und Nickel steht und weitere wesentliche Bestandteile Chrom, Aluminium und Yttrium sind.

Typische Beschichtungen dieser Art sind aus den US-Patenten 4,005,989 und 4,034,142 bekannt.

Die US 6,280,857 B1 offenbart eine Schutzschicht, die die Elemente Kobalt, Chrom und Aluminium auf Nickelbasis sowie zwingende Beimengungen von Yttrium, Rhenium und Silizium offenbart.

Die Bemühung um die Steigerung der Eintrittstemperaturen sowohl bei stationären Gasturbinen als auch bei Flugtriebwerken hat auf dem Fachgebiet der Gasturbinen eine große Bedeutung, da die Eintrittstemperaturen wichtige Bestimmungsgrößen für die mit Gasturbinen erzielbaren thermodynamischen Wirkungsgrade sind. Durch den Einsatz speziell entwickelter Legierungen als Grundwerkstoffe für thermisch hoch zu belastende Bauteile wie Leit- und Laufschaufeln, insbesondere durch den Einsatz einkristalliner Superlegierungen, sind Eintrittstemperaturen von deutlich über 1000°C möglich. Inzwischen erlaubt der Stand der Technik Eintrittstemperaturen von 950°C und mehr bei stationären Gasturbinen sowie 1100°C und mehr in Gasturbinen von Flugtriebwerken.

Beispiele zum Aufbau einer Turbinenschaufel mit einem einkristallinen Substrat, die seinerseits komplex aufgebaut sein kann, gehen hervor aus der WO 91/01433 A1.

Während die physikalische Belastbarkeit der inzwischen entwickelten Grundwerkstoffe für die hoch belasteten Bauteile im Hinblick auf mögliche weitere Steigerungen der Eintrittstemperaturen weitgehend unproblematisch ist, muss zur Erzielung einer hinreichenden Beständigkeit gegen Oxidation und Korrosion auf Schutzschichten zurückgegriffen werden. Neben der hinreichenden chemischen Beständigkeit einer Schutzschicht unter den Angriffen, die von Rauchgasen bei Temperaturen in der Größenordnung von 1000°C zu erwarten sind, muss eine Schutzschicht auch genügend gute mechanische Eigenschaften, nicht zuletzt im Hinblick auf die mechanische Wechselwirkung zwischen der Schutzschicht und dem Grundwerkstoff, haben. Insbesondere muss die Schutzschicht hinreichend duktil sein, um eventuellen Verformungen des Grundwerkstoffes folgen zu können und nicht zu reißen, da auf diese Weise Angriffspunkte für Oxidation und Korrosion geschaffen würden. Hierbei kommt typischerweise das Problem auf, dass eine Erhöhung der Anteile von Elementen wie Aluminium und Chrom, die die Beständigkeit einer Schutzschicht gegen Oxidation und Korrosion verbessern können, zu einer Verschlechterung der Duktilität der Schutzschicht führt, so dass mit einem mechanischen Versagen, insbesondere der Bildung von Rissen, bei einer in einer Gasturbine üblicherweise auftretenden mechanischen Belastung zu rechnen ist.

Dementsprechend liegt der Erfindung die Aufgabe zugrunde, eine Legierung und eine Schutzschicht anzugeben, die eine gute Hochtemperaturbeständigkeit in Korrosion und Oxidation aufweist, eine gute Langzeitstabilität aufweist und die außerdem einer mechanischen Beanspruchung, die insbesondere in einer Gasturbine bei einer hohen Temperatur zu erwarten ist, besonders gut angepasst ist.

Die Aufgabe wird gelöst durch eine Legierung gemäß Anspruch 1 und eine Schutzschicht gemäß Anspruch 14.

Eine weitere Aufgabe der Erfindung besteht darin, ein Bauteil aufzuzeigen, das einen erhöhten Schutz gegen Korrosion und Oxidation aufweist.

Die Aufgabe wird ebenso gelöst durch ein Bauteil gemäß Anspruch 15, insbesondere durch ein Bauteil einer Gasturbine oder Dampfturbine, das zum Schutz gegen Korrosion und Oxidation bei hohen Temperaturen einer Schutzschicht der vorbeschriebenen Art aufweist.

In den Unteransprüchen sind weitere vorteilhafte Maßnahmen aufgelistet. Die in den Unteransprüchen aufgelisteten Maßnahmen können in vorteilhafter Art und Weise beliebig miteinander kombiniert werden.

Der Erfindung liegt u. a. die Erkenntnis zugrunde, dass die Schutzschicht in der Schutzschicht selber und in dem Übergangsbereich zwischen Schutzschicht und Grundwerkstoff spröde Ausscheidungen zeigt. Diese mit der Zeit und Temperatur im Einsatz sich verstärkt ausbildenden Sprödphasen führen im Betrieb zu stark ausgeprägten Längsrissen in der Schutzschicht als auch im Interface Schicht-Grundwerkstoff mit anschließender Ablösung der Schutzschicht. Durch die Wechselwirkung mit Kohlenstoff, der aus dem Grundwerkstoff in die Schutzschicht hinein diffundieren kann oder während einer Wärmebehandlung im Ofen durch die Oberfläche in die Schutzschicht hinein diffundiert, erhöht sich zusätzlich die Sprödigkeit der Ausscheidungen. Durch eine Oxidation dieser Phasen wird die Triebkraft zur Rissbildung noch verstärkt.

Wichtig ist dabei auch der Einfluss von Kobalt, das die thermischen und mechanischen Eigenschaften bestimmt.

Die Erfindung wird im Folgenden näher erläutert.

Es zeigen
- Figur 1: ein Schichtsystem mit einer Schutzschicht,
- Figur 2: Zusammensetzungen von Superlegierungen,
- Figur 3: eine Gasturbine,
- Figur 4: eine perspektivische Ansicht einer Brennkammer und
- Figur 5: eine perspektivische Ansicht einer Turbinenschaufel.

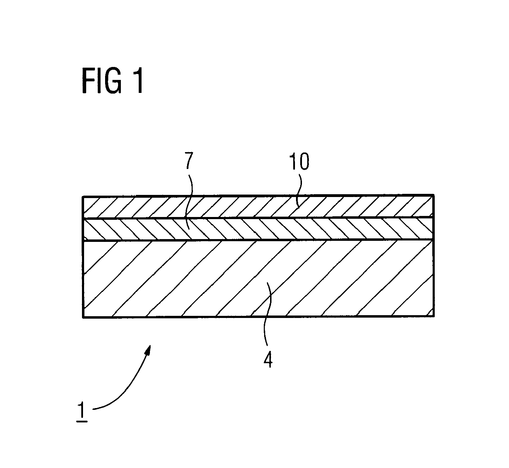

Erfindungsgemäß enthält eine Schutzschicht 7 (Fig. 1) zum Schutz eines Bauteils 1 gegen Korrosion und Oxidation bei einer hohen Temperatur folgende Elemente (in wt%):
26% bis 28% Kobalt (Co)
20% bis 22% Chrom (Cr)
7% bis 9% Aluminium (Al)
0,5% bis 0,7% Yttrium (Y) und/oder zumindest ein äquivalentes Metall aus der Gruppe umfassend Scandium (Sc) und die Elemente der Seltenen Erden, Rest Nickel (NiCoCrAlY). Optional enthält die Legierung bis 2.0wt% Silizium. Weiterhin kann die Legierung bis 11wt% Rhenium aufweisen. Dabei kann die vorteilhafte Wirkung des Elementes Rhenium unter Verhinderung der Sprödphasenbildung ausgenutzt werden. Optional kann die Legierung auch Ruthenium aufweisen. Das Ruthenium mit einem maximalen Anteil von 11wt% kann das Rhenium teilweise oder vollständig ersetzen.
Vorzugsweise wird nur Rhenium verwendet.

Festzustellen ist, dass die Anteile der einzelnen Elemente besonders abgestimmt sind im Hinblick auf ihre Wirkungen. Wenn die Anteile so bemessen sind, dass sich keine Chrom-Ausscheidungen bilden, entstehen vorteilhafterweise keine Sprödphasen während des Einsatzes der Schutzschicht, so dass das Laufzeitverhalten verbessert und verlängert ist.
Dies geschieht nicht nur durch einen geringen Chromgehalt, sondern auch, unter Berücksichtigung des Einflusses von Aluminium auf die Phasenbildung, durch genaue Bemessung des Gehalts an Aluminium.
Die Auswahl von 26wt% bis 28wt% Kobalt verbessert überraschend deutlich und überproportional die thermischen und mechanischen Eigenschaften der Schutzschicht 7.

Die Schutzschicht 7 weist bei guter Korrosionsbeständigkeit eine besonders gute Beständigkeit gegen Oxidation auf und zeichnet sich auch durch besonders gute Duktilitätseigenschaften aus, so dass sie besonders qualifiziert ist für die Anwendung in einer Gasturbine bei einer weiteren Steigerung der Eintrittstemperatur. Während des Betriebs kommt es kaum zu einer Versprödung, da die Schicht kaum Chrom-Ausscheidungen, insbesondere keine Chrom-Rhenium-Ausscheidungen, aufweist, die im Laufe des Einsatzes verspröden.

Vorteilhaft ist es, den Aluminiumanteil auf 8wt% festzulegen. Ebenso vorteilhaft ist es, den Anteil von Yttrium oder dem zumindest einen äquivalenten Element aus der Gruppe umfassend Scandium und den Elementen der Seltenen Erden auf 0,6wt% festzulegen. Gewisse Schwankungen ergeben sich aufgrund großindustrieller Herstellung, so dass auch Yttriumgehalte von 0,4wt% bis 0,5wt% bzw. 0,7wt% bis 0,8wt% verwendet werden und ebenfalls gute Eigenschaften zeigen.

Besonders günstig ist es dabei jeweils den Chromgehalt auf etwa 21wt%, den Aluminiumgehalt auf etwa 8wt% und den Kobaltgehalt auf etwa 27wt% festzulegen.

Vorzugsweise enthält die Legierung gegenüber den Elementen Nickel, Chrom, Kobalt, Aluminium, Yttrium (Sc, Seltene Erden), Silizium und Rhenium keine weiteren Elemente.

Besonders gute Ausführungsbeispiele sind:
1) Ni - 27Co - 21Cr - 8Al - 0.6Y
2) Ni - 27Co - 21Cr - 8Al - 0.6Y - 1.5Si
3) Ni - 27Co - 21Cr - 8Al - 0.6Y - 1.5Si - Re

Eine ebenso wichtige Rolle spielen die Spurenelemente im zu verspritzenden Pulver, die Ausscheidungen bilden und damit Versprödungen darstellen.

Die Pulver werden beispielsweise durch Plasmaspritzen aufgebracht (APS, LPPS, VPS, ...). Andere Verfahren sind ebenso denkbar (PVD, CVD, Kaltgasspritzen).

Die Dicke der Schutzschicht 7 auf dem Bauteil 1 wird vorzugsweise auf einen Wert zwischen etwa 100µm und 300µm bemessen.

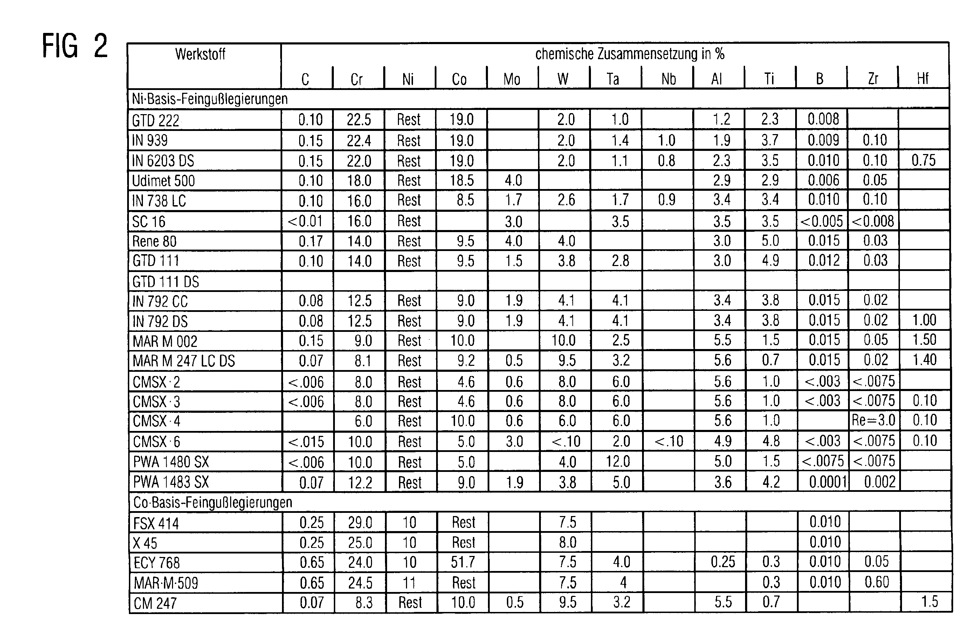

Bei diesem Bauteil ist die Schutzschicht 7 vorteilhafterweise aufgetragen auf ein Substrat 4 aus einer Superlegierung auf Nickel- oder Kobaltbasis.
Als Substrat 4 kommt insbesondere folgende Zusammensetzung in Frage (Angaben in wt%):
0,1% bis 0,15% Kohlenstoff
18% bis 22% Chrom
18% bis 19% Kobalt
0% bis 2% Wolfram
0% bis 4% Molybdän
0% bis 1,5% Tantal
0% bis 1% Niob
1% bis 3% Aluminium
2% bis 4% Titan
0% bis 0,75% Hafnium
wahlweise geringe Anteile von Bor und/oder Zirkon, Rest Nickel.
Zusammensetzungen dieser Art sind als Gusslegierungen unter den Bezeichnungen GTD222, IN939, IN6203 und Udimet 500 bekannt. Weitere vorteilhafte Alternativen für das Substrat 4 des Bauteils werden in Figur 2 aufgelistet.

Die Schutzschicht 7 eignet sich besonders zum Schutz eines Bauteils gegen Korrosion und Oxidation, während das Bauteil bei einer Materialtemperatur um etwa 950°C, bei Flugturbinen auch um etwa 1100°C, mit einem Rauchgas beaufschlagt wird.

Die Schutzschicht 7 gemäß der Erfindung ist damit besonders qualifiziert zum Schutz eines Bauteils einer Gasturbine 100, insbesondere einer Leitschaufel 120, Laufschaufel 130 oder anderen Komponente, die mit heißem Gas vor oder in der Turbine der Gasturbine beaufschlagt wird.
Die Schutzschicht 7 kann als overlay (Schutzschicht ist die äußere Schicht oder als Bondcoat (Schutzschicht ist eine Zwischenschicht) verwendet werden.

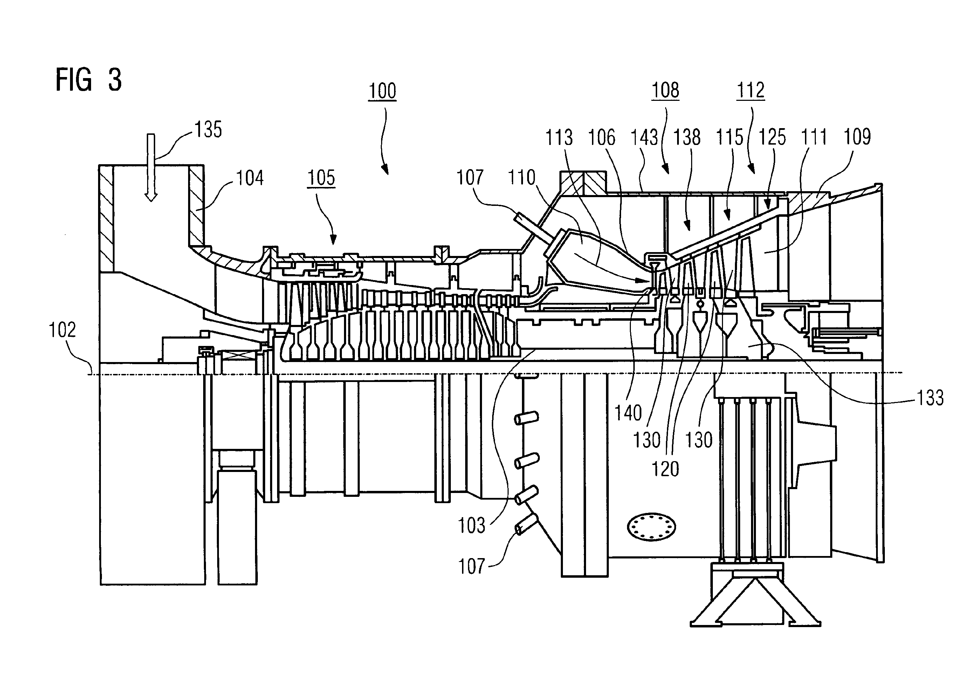

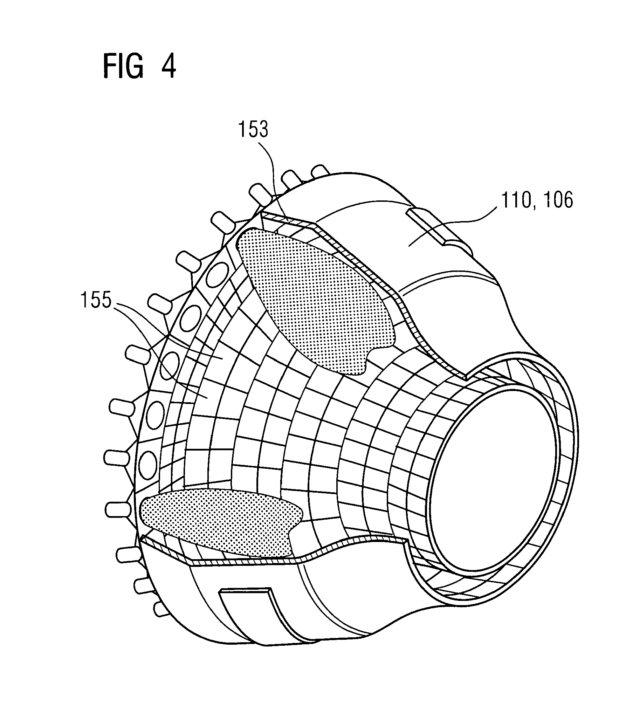

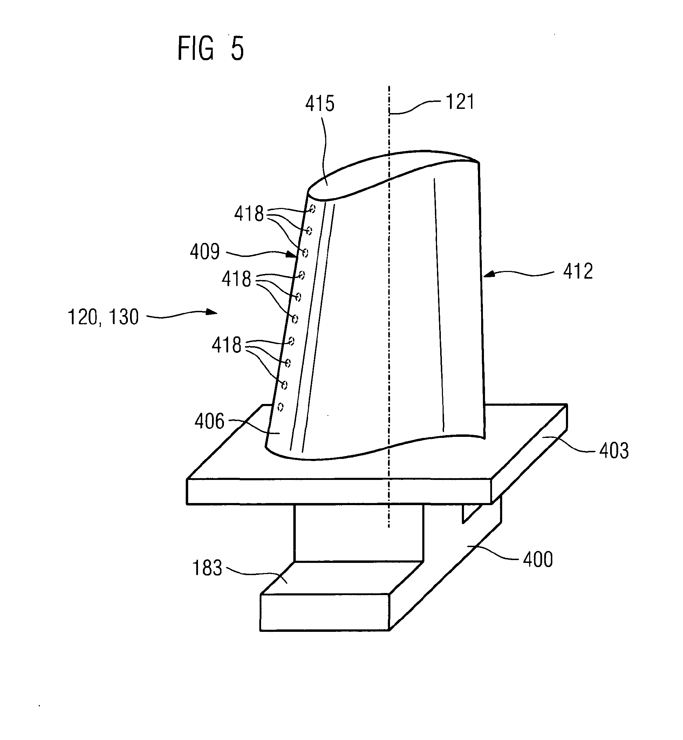

Figur 1 zeigt als ein Bauteil ein Schichtsystem 1.
Das Schichtsystem 1 besteht aus einem Substrat 4.
Das Substrat 4 kann metallisch und/oder keramisch sein. Insbesondere bei Turbinenbauteilen, wie z.B. Turbinenlauf- 120 (Fig. 1) oder -leitschaufeln 130 (Fig. 3, 5), Brennkammerauskleidungen 155 (Fig. 4) sowie anderen Gehäuseteilen einer Dampf- oder Gasturbine 100 (Fig. 3), besteht das Substrat 4 aus einer nickel-, kobalt- oder eisenbasierten Superlegierung.
Vorzugsweise werden kobaltbasierte Superlegierungen verwendet.
Auf dem Substrat 4 ist die erfindungsgemäße Schutzschicht 7 vorhanden.
Vorzugsweise wird diese Schutzschicht 7 durch LPPS (low pressure plasma spraying) aufgebracht.

Diese kann als äußere Schicht (nicht dargestellt) oder Zwischenschicht (Fig. 1) verwendet werden.
Im letzteren Fall ist auf der Schutzschicht 7 eine keramische Wärmedämmschicht 10 vorhanden.
Die Schutzschicht 7 kann auf neu hergestellte Bauteile und wieder aufgearbeitete Bauteile aus dem Refurbishment aufgebracht werden.
Wiederaufarbeitung (Refurbishment) bedeutet, dass Bauteile 1 nach ihrem Einsatz gegebenenfalls von Schichten (Wärmedämmschicht) getrennt werden und Korrosions- und Oxidationsprodukte entfernt werden, beispielsweise durch eine Säurebehandlung (Säurestrippen). Gegebenenfalls müssen noch Risse repariert werden. Danach kann ein solches Bauteil wieder beschichtet werden, da das Substrat 4 sehr teuer ist.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.
Die Ringbrennkammer 106 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 bspw. mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt.
Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, werden diese mittels eines Kühlmittels gekühlt.
Ebenso können die Substrate eine gerichtete Struktur aufweisen, d.h. sie sind einkristallin (SX-Struktur) oder weisen nur längsgerichtete Körner auf (DS-Struktur).
Als Material werden eisen-, nickel- oder kobaltbasierte Superlegierungen verwendet.
Beispielsweise werden Superlegierungen verwendet, wie sie aus der EP 1 204 776, EP 1 306 454, EP 1 319 729, WO 99/67435 oder WO 00/44949 bekannt sind. Diese Schriften bezüglich der Zusammensetzung der Superlegierungen und deren Vorteile sind Teil der Offenbarung.

Die Schaufeln 120, 130 weisen erfindungsgemäße Schutzschichten 7 gegen Korrosion und Korrosion und/oder eine Wärmedämmschicht auf. Die Wärmedämmschicht besteht beispielsweise ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt eine Brennkammer 110 einer Gasturbine 100, die ein Schichtsystem 1 aufweisen kann.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt und weist die Schutzschicht 7 gemäß Figur 1 auf.
Aufgrund der hohen Temperaturen im Inneren der Brennkammer 110 ist zudem für die Hitzeschildelemente 155 bzw. für deren Halteelemente ein Kühlsystem vorgesehen.

Die Materialien der Brennkammerwand und deren Beschichtungen können ähnlich der Turbinenschaufeln 120, 130 sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

Figur 5 zeigt in perspektivischer Ansicht eine Schaufel 120, 130, die ein Schichtsystem 1 mit der erfindungsgemäßen Schutzschicht 7 aufweist.
Die Schaufel 120, 130 erstreckt sich entlang einer Längsachse 121.
Die Schaufel 120, 130 weist entlang der Längsachse 121 aufeinander folgend einen Befestigungsbereich 400, eine daran angrenzende Schaufelplattform 403 sowie einen Schaufelblattbereich 406 auf. Insbesondere im Schaufelblattbereich 406 ist die Schutzschicht 7 oder ein Schichtsystem 1 gemäß Figur 1 ausgebildet.
Im Befestigungsbereich 400 ist ein Schaufelfuß 183 gebildet, der zur Befestigung der Laufschaufeln 120, 130 an der Welle dient. Der Schaufelfuß 183 ist als Hammerkopf ausgestaltet. Andere Ausgestaltungen, beispielsweise als Tannenbaum- oder Schwalbenschwanzfuß sind möglich. Bei herkömmlichen Schaufeln 120, 130 werden in allen Bereichen 400, 403, 406 der Laufschaufel 120, 130 massive metallische Werkstoffe verwendet. Die Laufschaufel 120, 130 kann hierbei durch ein Gussverfahren, durch ein Schmiedeverfahren, durch ein Fräsverfahren oder Kombinationen daraus gefertigt sein.

## Patentansprüche

1. Legierung
enthaltend folgende Elemente (in wt%):
26% bis 28% Kobalt (Co)
20% bis 22% Chrom (Cr)
7% bis 9% Aluminium (Al)
0,5% bis 0,7% Yttrium (Y) und/oder zumindest ein äquivalentes Metall aus der Gruppe umfassend Scandium (Sc) und die Elemente der Seltenen Erden
optional
0% bis 2% Silizium (Si),
0% bis 11% Rhenium (Re),
Rest Nickel (Ni).

2. Legierung nach Anspruch 1,
enthaltend 27wt% Kobalt.

3. Legierung nach Anspruch 1 oder 2,
enthaltend 21wt% Chrom.

4. Legierung nach Anspruch 1, 2 oder 3,
enthaltend 8wt% Aluminium.

5. Legierung nach Anspruch 1, 2, 3 oder 4,
enthaltend 0,6wt% Yttrium und/oder ein äquivalentes Metall aus der Gruppe umfassend Scandium und die Elemente der Seltenen Erden.

6. Legierung nach Anspruch 1, 2, 3, 4 oder 5,
enthaltend Silizium.

7. Legierung nach Anspruch 1 oder 6,
enthaltend 1.0wt% bis 2.0wt% Silizium,
insbesondere 1.5wt% Silizium.

8. Legierung nach Anspruch 1, 2, 3, 4 oder 5,
nicht enthaltend Silizium.

9. Legierung nach Anspruch 1, 2, 3, 4, 5, 6, 7 oder 8, nicht enthaltend Rhenium.

10. Legierung nach einem der Ansprüche 1 bis 8, enthaltend Rhenium.

11. Legierung nach Anspruch 1 oder 10,
enthaltend 9wt% - 11wt% Rhenium,
insbesondere 10wt% Rhenium.

12. Legierung nach Anspruch 1 oder 10,
enthaltend 1wt% - 3wt% Rhenium,
insbesondere 1.5wt% Rhenium.

13. Legierung nach einem der Ansprüche 1 bis 12,
bestehend aus Nickel, Kobalt, Chrom, Aluminium, Yttrium und optional aus Silizium und/oder Rhenium.

14. Schutzschicht zum Schutz eines Bauteils (1, 120, 130, 138, 155) gegen Korrosion und/oder Oxidation, insbesondere bei hohen Temperaturen,
die die Zusammensetzung der Legierung gemäß einem oder mehreren der Ansprüche 1 bis 13 aufweist.

15. Bauteil,
insbesondere ein Bauteil (1, 120, 130, 138, 155) einer Gasturbine (100),
das zum Schutz gegen Korrosion und Oxidation bei hohen Temperaturen eine Schutzschicht (7) nach Anspruch 14 aufweist.

16. Bauteil nach Anspruch 15,
bei dem auf der Schutzschicht (7) eine keramische Wärmedämmschicht (10) aufgebracht ist.

17. Bauteil nach Anspruch 15 oder 16,
bei dem ein Substrat (4) des Bauteils (1, 120, 130, 138, 155) aus einer nickelbasierten Legierung besteht.

18. Bauteil nach Anspruch 15 oder 16,
bei dem ein Substrat (4) des Bauteils (1, 120, 130, 138, 155) aus einer kobaltbasierten Legierung besteht.
